# EUROPEAN PATENT SPECIFICATION

(11) **EP 2 615 447 B1**
(45) Date of publication and mention of the grant of the patent: **20.01.2021**
(21) Application number: 12005763.3
(22) Date of filing: 08.08.2012
(51) Int. Cl.: G01N 23/04, G01N 23/083

(54) **X-RAY INSPECTION APPARATUS**
ROENTGENINSPEKTIONSVORRICHTUNG
APPAREIL D'INSPECTION PAR RAYONS X

(30) Priority: 10.01.2012 JP 2012002364
(43) Date of publication of application: 17.07.2013
(73) Proprietor: Yamaha Hatsudoki Kabushiki Kaisha, SHIZUOKA-KEN 438-8501 (JP)
(72) Inventor: Ookawa, Naonobu, Iwata-shi, Shizuoka-ken 438-8501 (JP)
(74) Representative: Müller-Boré & Partner Patentanwälte PartG mbB

(56) References cited:
- JP-A- 7 038 297
- JP-A- 9 021 758
- JP-A- 2000 007 146
- JP-A- 2003 315 288
- JP-A- 2004 045 331

## Description

### BACKGROUND OF THE INVENTION

### 1. Field of the Invention

The present invention relates to an X-ray inspection apparatus equipped with an X-ray imaging section.

### 2. Description of the Background Art

Heretofore, an X-ray inspection apparatus equipped with an X-ray imaging section has been known as disclosed, for example, in JP 2003-315288A (Document D1).

The Document D1 discloses an X-ray inspection apparatus which includes: an apparatus body; a table mechanism section for holding a printed circuit board conveyed inside the apparatus body, movably within a horizontal plane; an X-ray tube and an X-ray detection section which are disposed across the table mechanism section and in opposed relation to each other in an up-down direction. In this X-ray inspection apparatus, the table mechanism section is formed in a frame shape having an opening. X-rays are emitted from the X-ray tube toward the X-ray detection section through the opening of the table mechanism section. Thus, a printed circuit board placed on the opening can be irradiating with the X-rays to inspect a soldered state of components mounted thereon. In the above X-ray inspection apparatus, a member or mechanism section likely to pose an impediment during an X-ray imaging operation is not disposed between a portion of a printed circuit board falling within in an X-ray irradiation range, and the X-ray detection section. Further, when a printed circuit board is placed between the X-ray tube and the X-ray detection section, the printed circuit board is fixed, at two edges thereof mutually opposed in a width direction perpendicular to a conveyance direction, by a clamp plate comprised in the table mechanism section.

However, in the apparatus disclosed in the Document D1, even if the printed circuit board placed on the opening is fixed, at the width-directionally opposed edges thereof, to the table mechanism section to ensure a space with respect to the X-ray detection section, a central region of the printed circuit board is likely to bend downwardly under its own weight increased due to mounting of components. This bending deformation (sag deformation) of the printed circuit board becomes more and more prominent along with an increase in board size. If the printed circuit board having bending deformation is subjected to the X-ray inspection, a height position of an actual surface of the board with respect to an inspection plane (horizontal plane) varies depending on positions on the inspection plane, which cases a problem of being unable to accurately obtain an X-ray image along the inspection plane (inspection result). Moreover, during the X-ray inspection, the table mechanism section may be moved to change an imaging range in the printed circuit board. In this case, if the table mechanism section is moved in a situation where the printed circuit board undergoes bending deformation, the printed circuit board is likely to vibrate while wavingly deforming. Repetitive occurrence of such a situation during the X-ray imaging operation is also undesirable in view of obtaining an accurate inspection result.

Document JP 2004 045331 A discloses a carbon plate installed below a printed circuit imaged by means of X-ray irradiation spreading cylindrically by an X-ray generator as a spot-like X-ray generation source. A ball mechanism for supporting the carbon plate from a lower portion prevents a deflection of X-rays occurring from a dead weight of the printed circuit board, thus maintaining the specific distance between the printed circuit board and the X-ray generation point of the X-ray generator.

Document JP 9021458 A discloses a Y table mounts fixedly X tbales on slidably suppoting XZ bases. A glass board is supported astriding on the tables. Z tables are mounted fixedly on the bases between the tables to support the board at a point. The tables are disposed separately at a predetermined interval, and the space therebetween forms an inspecting area. The point contact surface is slightly riased higher than the support surface to correct the deflection of the board, thereby reducing it. Further, it is raised more slightly higher to float the board, the tables are moved, the board is carried, and returned to the original position. The inspecting area of the board is sequentially shifted at each inspecting area by this reciprocation. Accordingly, a large-sized board can be inspected in a small inspecting area to be able to efficiently inspect it with small distortion.

Document JP 2000 007146 A discloses a device to suppress generation of bending and vibration without damaging the surface of a substrate by sucking and holding a glass substrate by a holding frame forming an opening for transmission and illumination at the center and erecting a plurality of supporting pins supporting a glass plate on an upper surface of a transparent member with rigidity. By projectingly providing two reference pins and a reference pin on an upper surface front side of a holding frame and an upper surface left side, respectively, and abutting a side surface of a glass plate mounted on a supporting pin on the side surfaces of three reference pins, the positioning is performed. On an upper surface right side and an upper surface rear side of the holding frame, each one aligning pin is disposed so as to be freely movable in a center direction of the holding frame. The aligning pin presses a side surface of a glass substrate mounted on the supporting pin in the center direction of the holding frame by a driving mechanism connected with the lower part. At portions of at the peripheral edge of an opening for irradiating transmission light of the holding frame, suction pads are disposed and the glass substrate positioned by the reference pins and the aligning pins is sucked and fixed. Document JP 7038297 A discloses a device for holding a substrates with different substrate widths

### SUMMARY OF THE INVENTION

It is an object of the present invention to provide an X-ray inspection apparatus capable of accurately obtaining an X-ray image, while maximally eliminating a component or the like which poses an impediment to X-ray inspection.

This problem is solved by an X-ray inspection apparatus having the features disclosed in claim 1. Preferred embodiments are defined in the dependent claims.

### BRIEF DESCRIPTION OF THE DRAWINGS

FIG 1 is a perspective view illustrating an external appearance of an X-ray inspection apparatus according to a first embodiment of the present invention.
FIG 2 is a sectional view illustrating an internal structure of the X-ray inspection apparatus according to the first embodiment, when viewed from the side of a front wall of an apparatus body of the X-ray inspection apparatus.
FIG 3 is a sectional view illustrating the internal structure of the X-ray inspection apparatus, when viewed from the side of a lateral wall of the apparatus body.
FIG. 4 is a perspective view illustrating the apparatus body in a state in which an exterior cover and a shielding panel are detached from the X-ray inspection apparatus.
FIG. 5 is a perspective view illustrating the apparatus body in a state in which the exterior cover is detached from the X-ray inspection apparatus.
FIG. 6 is a perspective view illustrating a configuration of a conveying mechanism section in the X-ray inspection apparatus.
FIG. 7 is a top view illustrating the configuration of the conveying mechanism section in the X-ray inspection apparatus.
FIG. 8 is an enlarged perspective view for explaining a structure of an up-and-down mechanism unit installed in the conveying mechanism section.
FIG. 9 is an enlarged perspective view for explaining the structure of the up-and-down mechanism unit installed in the conveying mechanism section.
FIG. 10 is an exploded perspective view for explaining a structure for attaching a support member to the up-and-down mechanism unit.
FIG. 11 is a schematic diagram for explaining a state of a backup support mechanism section which supports a printed circuit board during X-ray imaging of the printed circuit board in the X-ray inspection apparatus.
FIG. 12 is a block diagram illustrating a circuit board manufacturing line incorporating the X-ray inspection apparatus.
FIG. 13 is a perspective view illustrating a configuration of a conveying mechanism section in an X-ray inspection apparatus according to an example not forming part of the invention.
FIG. 14 is a perspective view for explaining a structure for attaching a support member to an up-and-down mechanism unit in the example not forming part of the invention.
FIG. 15 is a schematic diagram for explaining a state of a backup support mechanism section which supports a printed circuit board during X-ray imaging of the printed circuit board in the X-ray inspection apparatus according to the example not forming part of the invention.

### DESCRIPTION OF THE PREFERRED EMBODIMENTS

An embodiment of the present invention will now be described based on the drawings.

### (FIRST EMBODIMENT)

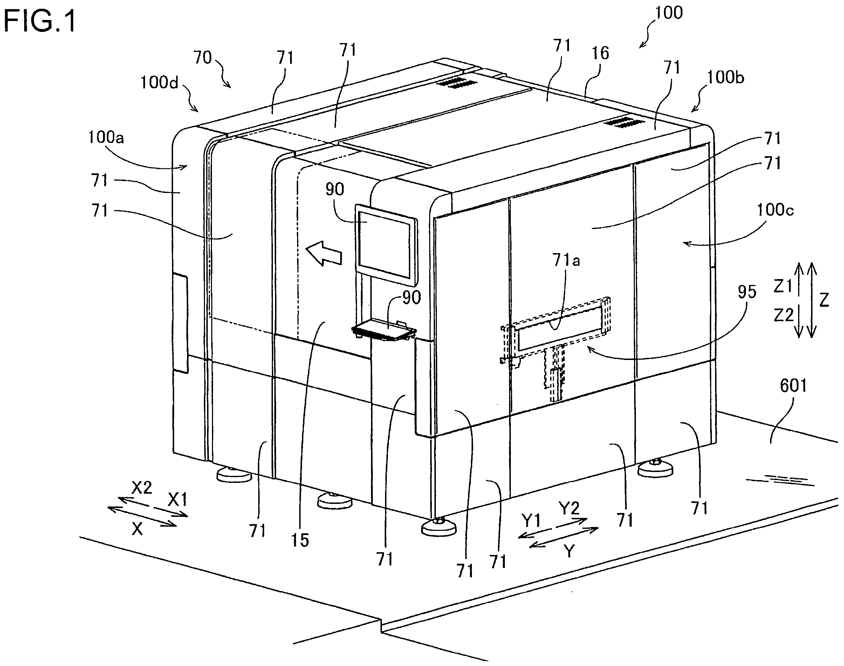

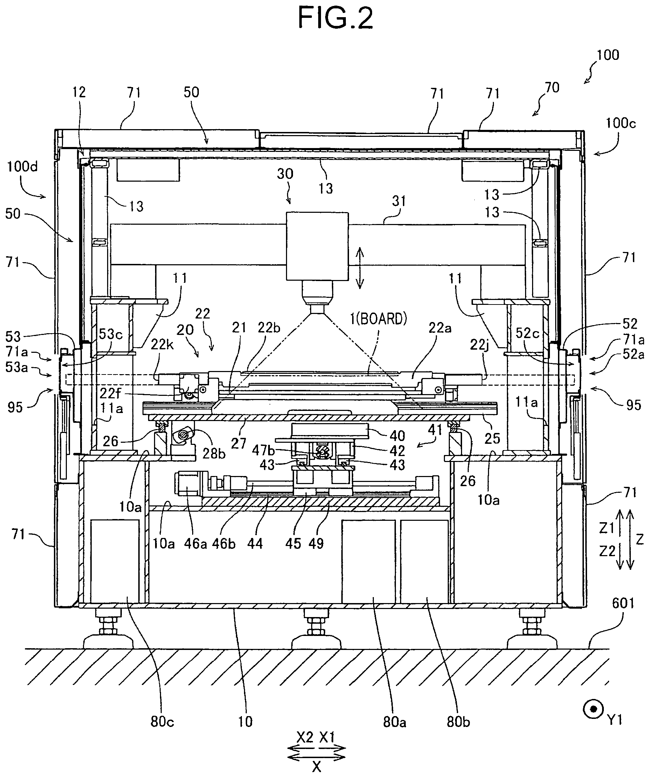

With reference to FIGS. 1 to 12, a structure of an X-ray inspection apparatus 100 according to a first embodiment of the present invention will be described. As illustrated in FIGS. 1 and 2, the X-ray inspection apparatus 100 according to the first embodiment is designed to perform various inspections, such as inspection of a state of solder joint, for an electronic component (not illustrated) mounted on a board 1 (see FIG. 2) as a circuit board. The board 1 having electronic components mounted thereon is one example of "target object" set forth in the appended claims.

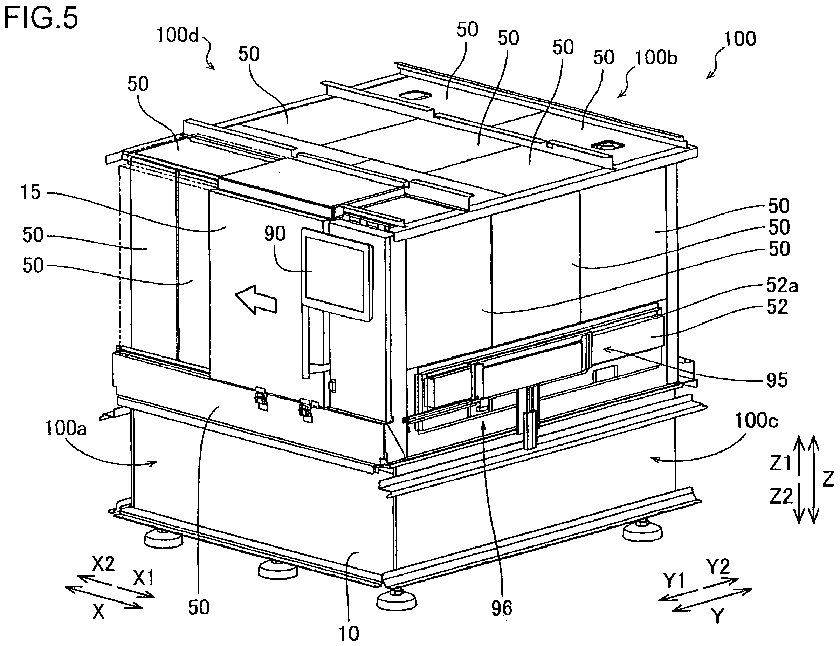

The X-ray inspection apparatus 100 includes a base 10, a conveying mechanism section 20, an X-ray source 30, an X-ray imaging section 40, a shielding panel 50 for shielding against X-rays, an exterior cover 70 for covering an apparatus body, a control unit 80a installed inside the base 10, a power supply unit 80b installed inside the base 10 together with the control unit 80a, a compressed-air source 80c for driving a movable member within the apparatus body, and a pair of shutter mechanism sections 95. As described here, the term "apparatus body" means a structural object remaining after removing the exterior cover 70 (see FIG. 1) from the X-ray inspection apparatus 100, as illustrated in FIG. 5. The conveying mechanism section 20 is one example of "conveyance section" set forth in the appended claims.

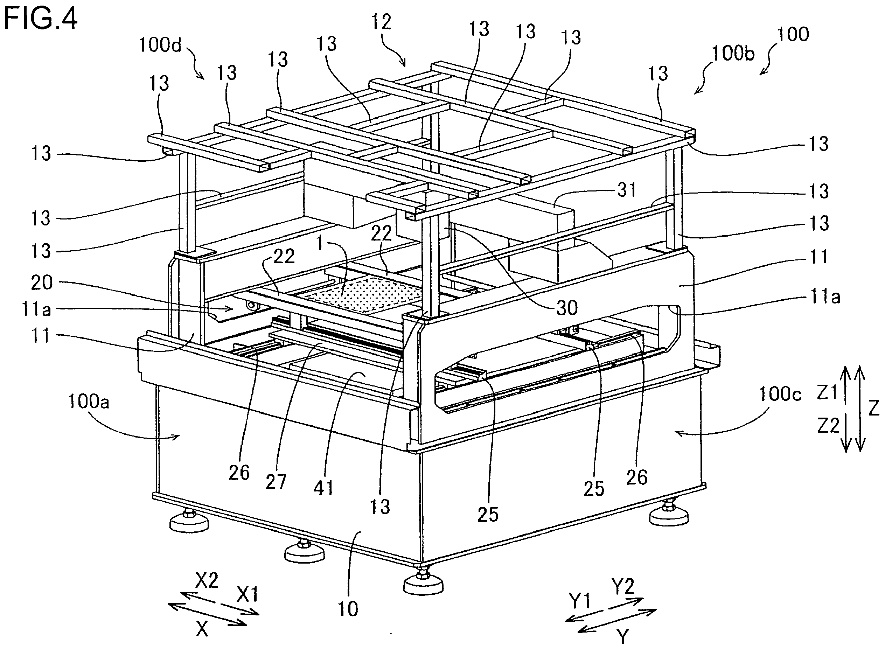

The base 10 is a member having a large weight, and has a role in allowing the apparatus body to be stably installed on a horizontal floor surface 601. A pair of support racks 11 are provided on an upper (Z1-side) surface 10a of the base 10 and mounted, respectively, along two edge regions of the board 1 in a board conveyance direction (X direction). More specifically, the support racks 11 are disposed in approximately parallel relation to each other, as illustrated in FIG. 4, wherein each of the support racks 11 extends along the upper surface 10a (see FIG. 2) in a Y direction substantially perpendicular to the X direction. In this embodiment, the X direction (board conveyance direction) is a right-left direction of the X-ray inspection apparatus 100, and the Y direction is a front-rear direction of the X-ray inspection apparatus 100. The X direction and the Y direction are respective examples of "first direction" and "second direction" set forth in the appended claims.

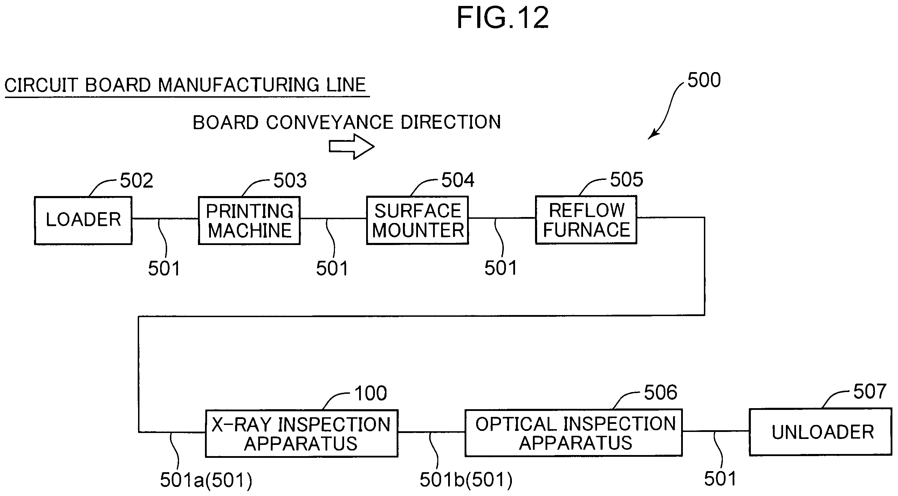

The X-ray inspection apparatus 100 is used as a part of a group of processing apparatuses constituting a circuit board manufacturing line 500 (see FIG. 12) for manufacturing a circuit board having electronic components mounted thereon. In this embodiment, the X-ray inspection apparatus 100 is connected, at each of an X1 side (lateral wall 100c) and an X2 side (lateral wall 100d) thereof, to another processing apparatus or a conveyance line. Generally, an operator accesses the apparatus body from a Y1 side (front wall 100a) or a Y2 side (rear wall 100b) of the X-ray inspection apparatus 100. Therefore, as illustrated in FIG. 1, the front wall 100a is provided with operating devices 90, such as an input device and an emergency stop button, and an openable and closable door 15 for access to the inside of the apparatus body. The rear wall 100b is also provided with a slide-type openable and closable door 16.

As illustrated in FIGS. 2 to 4, a support beam 31 for supporting the X-ray source 30, and a frame structure 12 for mounting thereon the shielding panel 50 and the exterior cover 70 are installed on the pair of support racks 11. The frame structure 12 is constructed by assembling a plurality of cross-sectionally rectangular-shaped hollow pipes 13 in a matrix-like arrangement.

The conveying mechanism section 20 has a role in holding an uninspected board 1 conveyed inside the apparatus body, in an imaging range between the X-ray source 30 and the X-ray imaging section 40. In addition to the function of holding a board 1 within the imaging range during an X-ray imaging operation, the conveying mechanism section 20 also has a conveying-in function of receiving a board 1 from an upstream-side conveyance line 501a (see FIG. 12), and a conveying-out function of transferring the inspected board 1 to a downstream-side conveyance line 501b (see FIG. 12). A configuration of the conveying mechanism section 20 will be described in detail below.

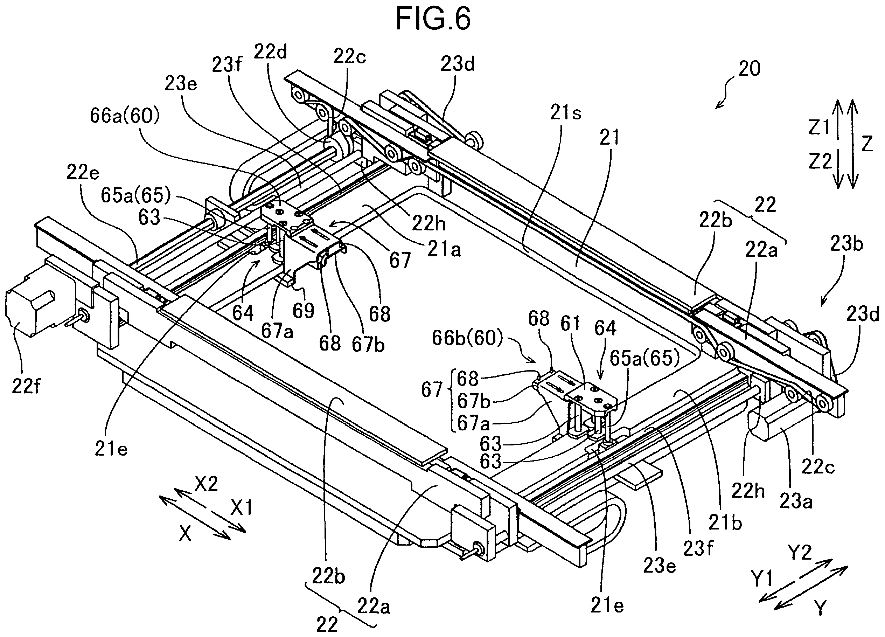

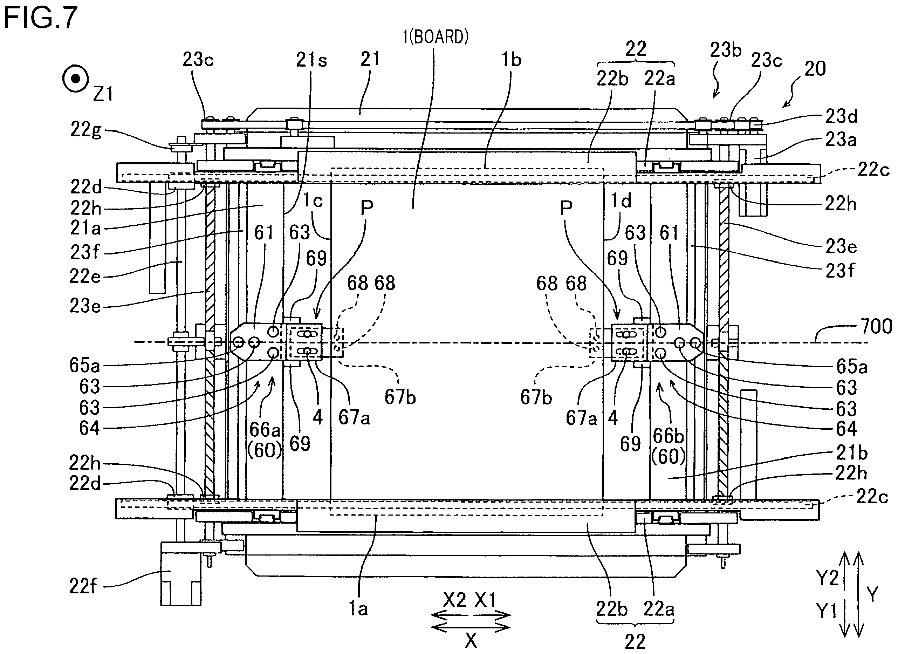

As illustrated in FIGS. 6 and 7, the conveying mechanism section 20 comprises a substructure 21 formed in a frame shape with an generally rectangular-shaped opening 21s penetrating therethrough in an up-down direction (Z direction), and a pair of conveyer units 22 provided on the substructure 21 to extend in the board conveyance direction (X direction), in approximately parallel relation to each other. Each of the conveyer units 22 includes a movable member 22a capable of conveying a board 1 in an X1 (X2) direction, and a clamp member 22b disposed in a central region of the movable member along the X direction to allow a Z-directional distance (height) with respect to the substructure 21 to be kept approximately constant. A combination of the movable member 22a and the clamp member 22b makes up "fixing device" set forth in the appended claims. More specifically, a combination of the movable member 22a and the clamp member 22b on the Y1 side is one example of "first fixing device" set forth in the appended claims, and a combination of the movable member 22a and the clamp member 22b on the Y2 side is one example of "second fixing device" set forth in the appended claims.

Each of the conveyer units 22 also includes a conveying belt 22c for conveying a board 1 while placing it thereon. The conveying belt 22c is circulatingly moved on an inward side of the movable member 22a, through a drive pulley 22d (driving side) and other auxiliary pulley members (driven side). The drive pulley 22d is installed to the movable member 22a in each of the pair of conveyer units 22, at a position outside (on the X2 side of) an edge portion 21a of the substructure 21, and a synchronization shaft 22e is attached to the pair of drive pulleys 22d. Each of the drive pulleys 22d is slidingly movable over an outer peripheral surface of the synchronization shaft 22e in an axial direction (Y direction) together with the movable member 22a, while maintaining a state in which it is rotationally driven by the synchronization shaft 22e.

A motor 22f is attached to a vicinity of an X2-side and Y1-side corner of the substructure 21 through a bracket member. A rotary shaft of the motor 22f is connected to the synchronization shaft 22e. A bearing member 22g is attached to a corner of the substructure 21 on a side opposite to the motor 22f (on the Y2 side), through a bracket member. An Y2-side end of the synchronization shaft 22e is rotatably supported by the bearing member 22g. Thus, in the pair of conveyer units 22, a rotation of the motor 22f is transmitted to the pair of drive pulleys 22d through the synchronization shaft 22e, and the conveying belts 22c are driven at approximately the same speed through the respective drive pulleys 22d synchronized in terms of rotational speed. Therefore, a board 1 on the conveying belts 22c is conveyed in the X direction through the conveyer units 22 without a difference in moving speed between a Y1-side edge 1a and a Y2-side edge 1b thereof.

A supply of compressed air from the compressed-air source 80c is controlled by the control unit 80a, so that each of the movable members 22a is moved in the up-down direction (Z direction) between an upper surface of the substructure 21 and a lower surface of the clamp member 22b. For the X-ray imaging operation, after the board 1 is conveyed to a position just below each of the clamp members 22b and stopped (see FIG. 7), the movable members 22a are moved in the Z1 direction (toward the front side of the drawing sheet of FIG. 7) together with the board 1 by a predetermined distance, so that the board 1 is clamped between corresponding ones of the movable members 22a and the clamp members 22b, and held by the conveyer units 22. Specifically, a vicinity of the Y1-side edge 1a is fixed by the Y1-side conveyer unit 22, and a vicinity of the Y2-side edge 1b is fixed by the Y2-side conveyer unit 22. The Z direction is one example of "up-down direction" set forth in the appended claims. The edge 1a and the edge 1b are respective examples of "one of the second-directionally opposed edges" and "the other edge" set forth in the appended claims.

As illustrated in FIGS. 6 and 7, a motor 23a is attached to an X1-side and Y2-side corner of the substructure 21 through a bracket member. Further, a driving force transmission unit 23b is provided along a Y2-side edge portion of the substructure 21 to transmit a driving force of the motor 23a. The driving force transmission unit 23b includes a plurality of pulley members including a pair of drive pulleys 23c, and a drive belt 23d adapted to be circulatingly moved through the pulley members. Each of the pair of drive pulleys 23c is provided in the driving force transmission unit 23b, respectively, at a position outside (on the X2 side of) the edge portion 21a of the substructure 21 and a position outside (on the X1 side of) an edge portion 21b of the substructure 21, and two ball screw shafts 23e are attached, respectively, to the drive pulleys 23c.

Two nut members 22h (total four) are assembled to each of the movable members 22a at positions where the two parallel ball screw shafts 23e penetrate through the X2 and X1-side portions thereof in the Y direction. A thread groove of the ball screw shaft 23e is threadingly engaged with each of the nut members 22h. The ball screw shaft 23e has a Y1-side region and a Y2-side region on both sides of a Y-directional center thereof, wherein the Y1-side and Y2-side regions are formed, respectively, with two types of thread grooves having opposite threading directions. Two rail members 23f are attached, respectively, to the edge portions 21a, 21b of the substructure 21 to extend in the Y direction. Each of the pair of the movable members 22a including the nut members 22h is slidingly movable over the two rail members along the Y direction.

In the conveying mechanism section 20 in the first embodiment, under a condition that the driving force transmission mechanism 23b is fixed to the substructure 21, according to a rotation of the ball screw shafts 23e transmitted from the motor 23a through the driving force transmission mechanism 23b, the pair of the conveyer units 22 having the nut members 22h threadingly engaged with the ball screw shafts 23e can be moved closer to or away from each other along the Y direction, with respect to a Y-directionally central line 700 (one-dot chain line) of the substructure 21. In other words, in the conveying mechanism section 20, a Y-directional distance between the conveyer units 22 can be adjusted in conformity to a width (Y-directional length) of a board 1, so that the Y1-side and Y2-side edges 1a, 1b are fixed, respectively, to the Y1-side and Y2-side conveyer unites 22, at positions corresponding to a size (Y-directional width) of the board 1. In this case, the ball screw shaft 23e is formed such that each of the Y1-side and Y2-side regions has the same thread groove pitch. Thus, the Y1-side and Y2-side conveyer unites 22 are slidingly moved in opposite directions by the same distance, under a condition that a Y-directional central portion (center line) of the board 1 is aligned with the central line 700. This makes it possible to, even if a board 1 has any width (Y-directional length) in a predetermined range, convey and fix the board 1 while adjusting a distance between the conveyer units 22 in conformity to the width of the board.

As illustrated in FIG. 6, the (X2-side) edge portion 21a and the (X1-side) edge portion 21b of the substructure 21 each extending in the Y direction are provided, respectively, with a pair of backup support mechanism sections 60. As illustrated in FIGS. 6, 7 and 10, the pair of backup support mechanism sections 60 are functional components having the same structure, except that they are opposite to each other in terms of an installation position (installation direction) with respect to the substructure 21, as viewed in the X-direction. Thus, the following description will be made primarily about a structure of the backup support mechanism section 60 installed to the (X2-side) edge portion 21a.

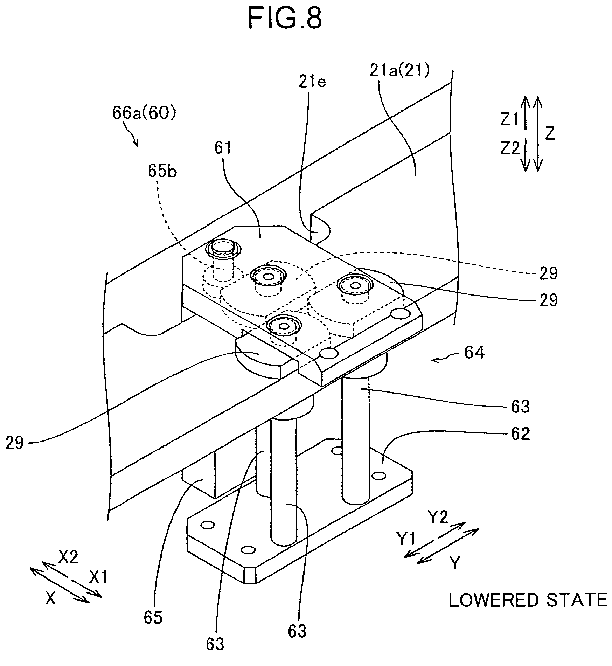

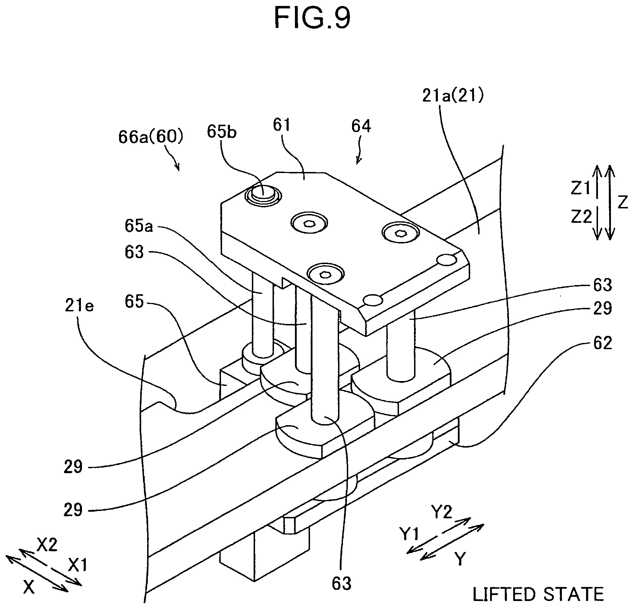

The backup support mechanism section 60 includes the up-and-down mechanism unit 66a. As illustrated in FIGS. 8 and 9, the up-and-down mechanism unit 66a includes: a liftable portion 64 having an upper member 61, a lower member 62 and three mutually parallel shaft members 63; and an air cylinder 65 having a rod 65a adapted to be driven in the up-down direction by compressed air from the compressed-air source 80c (see FIG. 2). In FIGS. 8 and 9, the up-and-down mechanism unit 66a is illustrated alone in a state in which an aftermentioned support member 67 (see FIG. 6) is detached from the backup support mechanism section 60. The up-and-down mechanism unit 66a is one example of "first up-and-down mechanism unit" set forth in the appended claims.

The substructure 21 has three through-holes each penetrating through the edge portion 21a in the up-down direction (Z direction), and three bush members 29 attached thereto correspondingly to the respective through-holes. Each of the shaft members 63 is slidably inserted into a corresponding one of the through-holes. In this state, an upper (Z1-side) end of the shaft member 63 is fixed to the upper member 61, and a lower (Z2-side) end of the shaft member 63 penetrating through the edge portion 21a is fixed to the lower member 62. The air cylinder 65 is fixed to an X2-side outer surface 21e of the edge portion 21a along a thickness direction. A Z1-side distal end 65b of the rod 65a is attached to a vicinity of an edge of the upper member 61. Thus, the up-and-down mechanism unit 66a of the backup support mechanism section 60 is configured such that, in conjunction with a movement of the rod 65a driven in the up-down direction by the air cylinder 65, the liftable portion 64 is moved in the up-down direction with respect to the substructure 21. FIG. 8 illustrates a state in which the liftable portion 64 is fully moved downwardly (i.e., fully lowered), and FIG. 9 illustrates a state in which the liftable portion 64 is fully moved upwardly (i.e., fully lifted). As illustrated in FIG. 7, the liftable portion 64 of the up-and-down mechanism unit 66a is disposed at a position P of the edge portion 21a of the substructure 21 corresponding to a point on the Y-directionally central line 700.

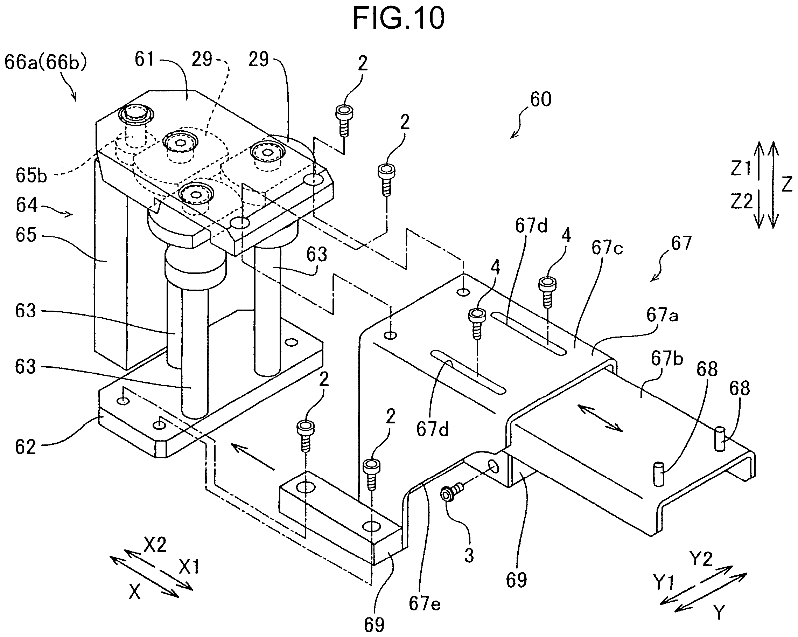

As illustrated in FIGS. 6 and 7, a support member 67 having a pin (in this embodiment, two pins) 68 having a rounded distal end is attached to the liftable portion 64 of the up-and-down mechanism unit 66a. More specifically, as illustrated in FIG. 10, the support member 67 is detachably attached to the liftable portion 64 using a screw member (in this embodiment, total six screw members) 2, in such a manner that it is sandwiched between the upper member 61 and the lower member 62. In this case, two bracket members 69 are first attached, respectively, to Z2-side ends of Y-directionally opposed walls of a member body 67a of the support member 67, using a screw member (in this embodiment, total four screw members) 3. In this state, the bracket members 69 are fixed to an upper surface of the lower member 62 using a screw member (in this embodiment, total four screw members) 2, and an upper wall 67c of the member body 67a is fixed to a lower surface of the upper member 61 using an additional screw member (in this embodiment, total two additional screw members) 2. Although the substructure 21 is illustrated in FIG. 8, illustration thereof is omitted in FIG. 10. The support member 67 is one example of "first support member" set forth in the appended claims.

As illustrated in FIG. 7, the support member 67 is attached to a distal (X1-side) end of the liftable portion 64, corresponding to a position protruding from the edge portion 21a of the substructure 21 inwardly (to the inside of the opening 21s). The support member 67 is moved in the up-down direction within the opening 21s at a position adjacent to an X2-side edge of the opening 21s, in conjunction with an up-and-down movement of the liftable portion 64.

As illustrated in FIG. 10, the support member 67 has an extension portion 67b which is extendable from an X1-side distal end of the member body 67a fixable to the liftable portion 64, in the X1 direction. The two pins 68 are provided on an X1-side distal end of the extension portion 67b to stand in the Z1 direction. The two pins 68 are disposed adjacent to each other along the Y direction. Each of the member body 67a and the extension portion 67b is formed from a sheet-metal member, and subjected to bending to have a groove shape in Y-directional cross-section. The extension portion 67b is fitted into the member body 67a upwardly (in the Z1 direction) from below (the Z2 side of) the member body 67a.

The member body 67a has two elongate holes 67d formed to extend in the X-direction and arranged in Y-directionally spaced-apart parallel relation to each other. The extension portion 67b is fixed to the member body 67a in an extendable and retractable manner, by a bolt member 4 (total two) inserted into each of the elongate holes 67d. Specifically, an X-directional position of the pins 68 with respect to the liftable portion 64 can be freely set by slightly loosening the bolt members 4 and extracting or retracting the extension portion 67b along the X-direction. Thus, a protruding length of the extension portion 67b can be adjusted in conformity to an X-directional length of a board 1, so that it becomes possible to allow the pins 68 to support an edge 1c of the board 1 and a vicinity of the edge 1c, from the side of a lower surface 1e (see FIG, 11) of the board 1, irrespective of the X-directional length of the board 1.

The backup support mechanism section 60 including the up-and-down mechanism unit 66b installed to the X1-side edge portion 21b of the substructure 21 has the same structure as that of the aforementioned X2-side backup support mechanism section 60. The up-and-down mechanism unit 66b is one example of "second up-and-down mechanism unit" set forth in the appended claims.

In the X-ray inspection apparatus 100 having the above configuration, when a board 1 is subjected to imaging by the X-ray imaging section 40 (see FIG. 2) under the condition that the edge 1a and the edge 1b of the board 1 are fixed to the pair of the conveyer units 22, the X1-side and X2-side liftable portions 64 (up-and-down mechanism units 66a, 66b) are moved in an up direction perpendicular to a horizontal plane (X-Y plane) (toward the front side of the drawing sheet of FIG. 7) by a predetermined height at the same timing (the liftable portion 64 is moved from the position illustrated in FIG. 8 to the position illustrated in FIG. 9). In conjunction with the upward movement of the liftable portions 64, the support members 67 attached to respective ones of the liftable portions 64 are moved upwardly to support the (X2-side) edge 1c and the (X1-side) edge 1d of the board 1, respectively.

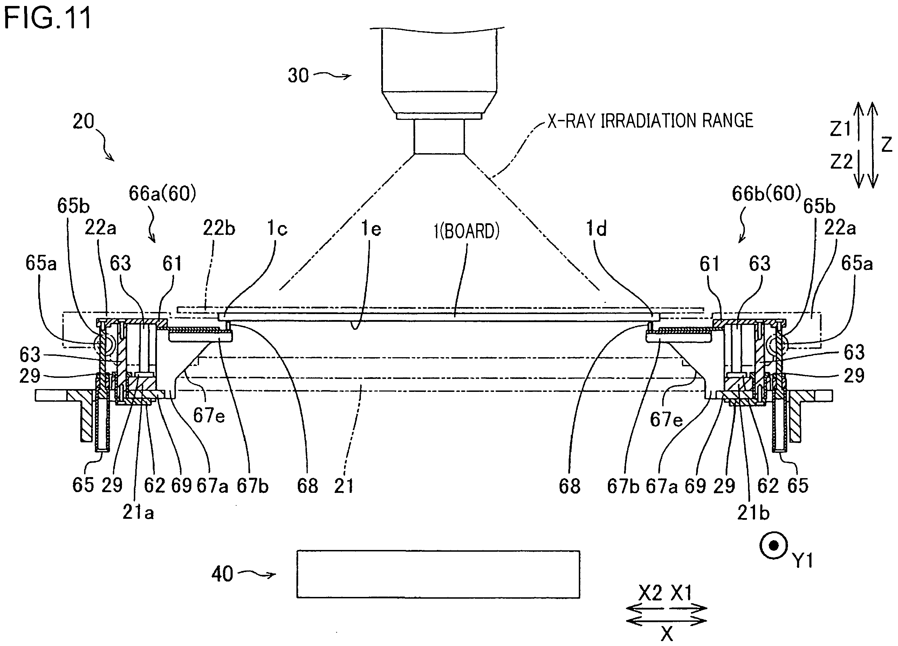

At this time, the pins 68 of each of the support members 57 attached to respective ones of the liftable portions 64 support a vicinity of a Y-directional central region (a region corresponding to the central line 700 or a vicinity of the region) of a respective one of the edges 1c, 1d of the board 1, from below the board 1. In other words, as illustrated in FIG. 11, the pins 68 of each of the support members 67 support the lower surface 1e of the board 1 at positions adjacent to a corresponding one of the X-directionally opposed edges 1c, 1d. Thus, even if a portion of the board 1 around the central line 700 is likely to bend vertically downwardly due to its own weight under the condition that the edges 1a, 1b of the board 1 are fixed to respective ones of the conveyer units 22, the portion of the board 1 can be supported by the pins 68 from the right and left sides, so that it becomes possible to suppress bending deformation of the board 1. In this state, X-rays are emitted from the X-ray source 30 to a substantially horizontal inspection plane in the board 1, and an X-ray image of the board 1 in this inspection plane is obtained by the X-ray imaging section 40. The distal end of each of the pins 68 has a curved surface formed in a generally hemispherical shape with a predetermined curvature radius. This allows the board 1 to be supported by the pin 68 with a minimized contact area therebetween.

As illustrated in FIG. 11, the member body 67a of the support member 67 has a cross-section which is tapered in a direction from a base end thereof fixed to the liftable portion 64 toward the distal end thereof to which the extension portion 67b is attached (on the side of the board 1), when viewed in the Y direction. In the illustrated embodiment, the upper wall 67c (see FIG. 10) is approximately horizontal, whereas a lower wall 67e is inclined at about 45 degrees. This is an improvement in shape to maximally prevent the member body 67a of the support member 67 from entering into an X-ray irradiation range. This configuration makes it possible to maximally prevent the right and left support members 67 from unexpectedly appearing in an X-ray image, even if the support members 67 are operated to extend the extension portions 67b toward respective ones of the edges 1c, 1d of the board 1 and support the edges 1c, 1d.

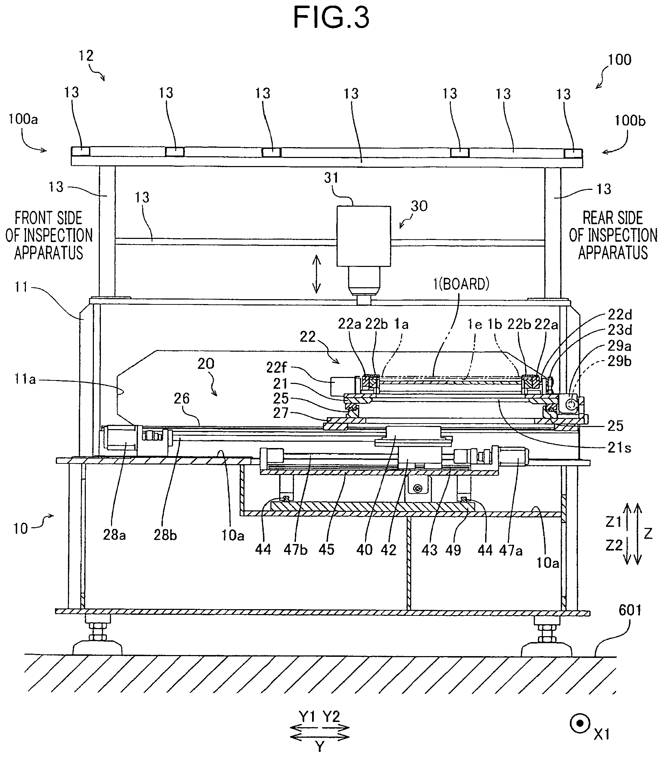

As illustrated in FIGS. 2 and 3, the conveying mechanism section 20 further includes a pair of X-axis rails 25 for moving the substructure 21 horizontally along the X direction (a direction perpendicular to the drawing sheet of FIG. 3), and a pair of Y-axis rails 26 for moving both of the substructure 21 and the X-axis rails 25 horizontally along the Y direction (a direction perpendicular to the drawing sheet of FIG. 2). The pair of X-axis rails 25 are disposed approximately parallel to each other with a predetermined distance therebetween in the Y direction, wherein each of the X-axis rails 25 extends in the X direction (the direction along the drawing sheet of FIG. 2). The X-axis rails 25 are fixed to an upper surface of a seat member 27 disposed between the substructure 21 and the pair of Y-axis rails 26 (arranged in the Z direction). The seat member 27 is slidingly movable over the Y-axis rails 26 in the Y direction. The pair of Y-axis rails 26 are disposed approximately parallel to each other with a predetermined distance therebetween in the X direction, wherein each of the Y-axis rails 26 extends in the Y direction (the direction perpendicular to the drawing sheet of FIG. 2). The Y-axis rails 26 are laid on corresponding regions of the upper surface 10a of the base 10.

The conveying mechanism section 20 further includes: a Y-axis motor 28a provided on the upper surface 10a of the base 10 at a position adjacent to a Y1-side end of one of the Y-axis rails 26; a Y-axis ball screw 28b connected to the Y-axis motor 28a; an X-axis motor 29a provided on the seat member 27; and an X-axis ball screw 29b (whose outer shape is indicated by the broken line) connected to the X-axis motor 29a. In this way, the substructure 21 having the conveyer units 22 can be reciprocatingly moved over the X-axis rails 25 in the X direction by the X-axis motor 29a and the X-axis ball screw 29b, and reciprocatingly moved over the Y-axis rails 26 in the Y direction by the Y-axis motor 28a and the Y-axis ball screw 29b. Thus, the conveying mechanism section 20 can be moved to any position within the X-Y plane, over the upper surface 10a of the base 10.

In the first embodiment, when a board 1 is moved within the X-Y plane under the condition that it is fixed (locked) to the conveyer units 22, as well as when the board 1 is subjected to imaging by the X-ray imaging section 40, the respective liftable portions 64 of the up-and-down mechanism units 66a, 66b are moved upwardly, so that the support members 67 attached to respective ones of the liftable portions 64 are moved in the up direction (Z1 direction), and thereby the pins 68 at the distal end of each of the support members 67 support a respective one of the X-directionally opposed edges (X2-side and X1-side edges) 1c, 1d of the board 1. Thus, when the entire substructure 21 is moved during an X-ray imaging operation to change an imaging area of the board 1, and when the entire substructure 21 is moved before or after the X-ray imaging operation to set the board 1 to a predetermined position, it becomes possible to maximally prevent the board 1 fixed (locked) to the conveyer units 22 from bending downwardly.

In an operation of conveying a board 1 into the apparatus body, the conveying mechanism section 20 is operable to move one end 22j of each of the conveyer units 22 to a vicinity of an inner surface 52c of an X1-side conveyer shielding portion 52, and receive an uninspected board 1 from the upstream-side conveyance line 501a (see FIG. 12). On the other hand, in an operation of conveying the board 1 out of the apparatus body, the conveying mechanism section 20 is operable to move the other end 22k of each of the conveyer units 22 to a vicinity of an inner surface 53c of an X2-side conveyer shielding portion 53, and transfer the board 1 to the downstream-side conveyance line 501b (see FIG. 12). The conveyer shielding portions 52, 53 form a part of the shielding panel 50 for shielding against X-rays emitted from the X-ray source 30, to prevent the X-rays from leaking from the apparatus body to the outside. Each of the conveyer shielding portions 52, 53 is formed to protrude toward the exterior cover 70 more largely than the remaining part of the shielding panel 50, correspondingly to a moving range (in the X direction and Y direction) of the conveyer units 22. The conveyer shielding portion 52 is formed with an opening 52a for allow a board 1 to be conveyed into the apparatus body therethrough, at a position intersecting a conveyance path of a board 1. The conveyer shielding portion 53 is formed with an opening 53a for allowing the board 1 to be conveyed out of the apparatus body therethrough.

As illustrated in FIG. 1, the exterior cover 70 (right and left cover members 71) is also formed with right and left openings 71a, wherein a part of the shutter mechanism section 95 (shutter member) is exposed on an inner side of each of the openings 71a. Thus, a user or operator can perform a predetermined operation through the operating devices 90 to check opening and closing movements of each of the right and left shutter mechanism sections 95 (see FIG. 2). The X-ray inspection apparatus is configured such that, if the opening movement of at least one of the shutter mechanism sections 95 is detected by a detection switch 96 during operation, the emission of X-rays is stopped.

As illustrated in FIGS. 2 and 3, the X-ray source 30 is suspended from the support beam 31 and disposed just above (on the Z1 side of) the conveying mechanism section 20. In this state, the X-ray source 30 has a function of emitting X-rays to a board 1 located therebelow (on the Z2 side thereof). The X-ray source 30 is moved along the up-down direction (Z direction) within a predetermined height range by a non-illustrated up-and-down mechanism unit. This makes it possible to change a resolution of an X-ray image to be obtained, depending on whether the X-ray source 30 is moved closed to or away from the board 1.

The X-ray imaging section 40 is disposed on a side opposite to the X-ray source 30 across the conveying mechanism section 20, i.e., just below (on the Z2 side of) the conveying mechanism section 20. The X-ray imaging section 40 has a function of detecting X-rays emitted from the X-ray source 30 and transmitted through the board 1 to produce an X-ray image (transmission X-ray image). The X-ray imaging section 40 is movable in a space just below the conveying mechanism section 20 within a horizontal plane (X-Y plane) by a driving mechanism 41 provided between the upper surface 10a of the base 10 and the conveying mechanism section 20.

Specifically, as illustrated in FIGS. 2 and 3, the driving mechanism 41 includes a pair of Y-axis rails 43 for moving a seat member 42 having the X-ray imaging section 40 fixed thereon, horizontally along the Y direction (the direction perpendicular to the drawing sheet of FIG. 2), and a pair of X-axis rails 44 for moving both of the seat member 42 and the Y-axis rails 43 horizontally along the X direction (the direction perpendicular to the drawing sheet of FIG. 3). The Y-axis rails 43 are laid on an upper surface of a seat member 45 disposed between the seat member 42 and the X-axis rails 44 (arranged in the Z direction). This seat member 45 is slidingly movable over the X-axis rails 44 in the X direction. The pair of X-axis rails 44 are disposed approximately parallel to each other with a predetermined distance therebetween in the Y direction, wherein each of the X-axis rails 44 extends in the X direction (the direction perpendicular to the drawing sheet of FIG. 3). The X-axis rails 44 are laid on a seat member 49 fixed onto the upper surface 10a of the base 10 in a region on which the driving mechanism 41 is disposed.

The driving mechanism 41 includes: an X-axis motor 46a provided on the upper surface 10a of the base 10 at a position adjacent to a X2-side end of one of the X-axis rails 44; an X-axis ball screw 46b connected to the X-axis motor 46a; a Y-axis motor 47a provided adjacent to a Y2-side end on the seat member 45; and a Y-axis ball screw 47b connected to the Y-axis motor 47a. In this way, the seat member 42 having the X-ray imaging section 40 fixed thereto can be reciprocatingly moved over the X-axis rails 44 in the X direction (see FIG. 2) by the X-axis motor 46a and the X-axis ball screw 46b, and reciprocatingly moved over the Y-axis rails 43 in the Y direction (see FIG. 3) by the Y-axis motor 47a and the Y-axis ball screw 47b. Thus, the X-ray imaging section 40 can be moved over the upper surface 10a of the base 10 within the X-Y plane, in a region below (at a height position lower than) the conveying mechanism section 20.

As above, the X-ray inspection apparatus 100 is configured such that a board 1 (the conveying mechanism section 20) and the X-ray imaging section 40 can be moved within a predetermined range in the X-Y plane, mutually independently, under a condition the X-ray source 30 is disposed at a predetermined irradiation position (in the Z direction). Thus, a relative positional relationship of each of the board 1 and the X-ray imaging section 40 with respect to the X-ray source 30 can be adjusted by moving the conveying mechanism section 20 and the X-ray imaging section 40, mutually independently, so that it becomes possible to produce an image not only by emitting X-rays to the board 1 in the Z-direction from immediately above the board 1 but also by emitting X-rays to the board 1 from a direction oblique with respect to the board 1.

The control unit 80a (see FIG. 2) has a function of controlling an operation of the entire X-ray inspection apparatus 100 which includes the conveying mechanism section 20 having the backup support mechanism section 60, the X-ray source 30, the X-ray imaging section 40, the shutter mechanism sections 95 and the compressed-air source 80c (see FIG. 2). During the X-ray imaging operation, in accordance with instructions of the control unit 80a, a board 1 is fixed to the conveyer units 22, and the air cylinder 65 (see FIG. 6) is controlled depending on a fixed state of the board 1 to move the liftable portions 64 of the up-and-down mechanism units 66a, 66b (see FIG. 6) upwardly. On the other hand, before or after the X-ray imaging operation, the control unit 80a is operable to drive the conveying belt 22c (see FIG. 6), after detection of a lowered (unlocked) state of the movable members 22a with respect to the clamp members 22b (see FIG. 6), and a lowered state of the liftable portions 64. The power supply unit 80b (see FIG. 8) has a function of supplying electric power to the entire X-ray inspection apparatus 100 including the control unit 80a and the compressed-air source 80c.

The X-ray inspection apparatus 100 according to the first embodiment is useable as a part of a group of apparatuses constituting a circuit board manufacturing line for manufacturing a electronic component-mounted circuit board, while conveying a board through a conveyance line.

For example, as illustrated in FIG. 12, a board 1 before mounting of electronic components is fed to a conveyance line 501 from a loader 502 holding the board 1, and subjected to a process of printing solder paste onto the board 1 by a printing machine 503, a process of mounting electronic components onto the board 1 by a surface mounter 504, and a process of melting the solder through a reflow furnace 505 to join the electronic components to an electrode section on the board 1. Then, the electronic component-mounted board 1 is conveyed toward the X-ray inspection apparatus 100. When the electronic component-mounted board 1 is transferred from the conveyance line 501a through the opening 52a of the conveyer shielding portion 52 (see FIG. 2), it is subjected to imaging using X-rays in the X-ray inspection apparatus 100 to inspect a state of solder joint of each electronic component. Subsequently, the board 1 is transferred to the conveyance line 501b from the conveying mechanism section 20 through the opening 53a of the conveyer shielding portion 53, and then conveyed into an optical inspection apparatus 506 in a next station. In the optical inspection apparatus 506, the board 1 is subjected to appearance inspection of an electronic component-mounted state using visible light. After completion of the above inspection processes, the board 1 is transferred from the conveyance line 501 to an unloader 507, and the manufacturing process of the board 1 is terminated.

As described above, in the first embodiment, the conveying mechanism section 20 includes the pair of backup support mechanism sections 60 including the up-and-down mechanism units 66a, 66b (see FIG. 6), respectively. The up-and-down mechanism unit 66a is adapted to be disposed outward (on the X2 side) of one 1c of the X-directionally opposed edges of the board 1 within the horizontal plane (X-Y plane), and, when the board 1 is subjected to imaging by the X-ray imaging section 40, to be moved in the up-down direction (Z direction) so as to support the board 1. The up-and-down mechanism unit 66b is adapted to be disposed outward (on the X1 side) of the other one 1d of the X-directionally opposed edges of the board 1, and, when the board 1 is subjected to imaging by the X-ray imaging section 40, to be moved in the up-down direction (Z direction) so as to support the board 1. In this way, the X-ray imaging operation can be performed under the condition that the backup support mechanism section 60 including the up-and-down mechanism units 66a, 66b is moved in the up direction (Z1 direction) to secondarily support the board 1. In other words, the backup support mechanism section secondarily supports the board 1, so that it becomes possible to maximally prevent the board 1 from bendingly deforming downwardly with respect to the horizontal plane due to its own weight. In the X-ray inspection apparatus 100, the board 1 in this state can be subjected to the X-ray imaging operation, so that it becomes possible to accurately obtain an X-ray image along a desired inspection plane (horizontal plane). In particular, in the case where X-rays are emitted to the board 1 from a direction oblique with respect to the board 1, a displacement in height position with respect to the inspection plane due to downward bending of the board 1 has a great impact on sharpness of an X-ray image. Thus, the suppression of bending deformation in the board 1 makes it possible to obtain a more accurate X-ray image even in the X-ray irradiation from an oblique direction.

The up-and-down mechanism units 66a, 66b are disposed outward (on the X2 side) of the edge 1c of the board 1 and disposed outward (on the X1 side) of the edge 1d of the board 1, respectively. This makes it possible to facilitate maximally preventing the up-and-down mechanism units 66a, 66b from unexpectedly appearing in an X-ray image of the board 1.

The up-and-down mechanism unit 66a is provided in the edge portion 21a of the substructure 21, and the up-and-down mechanism unit 66b is provided in the edge portion 21b of the substructure 21. This makes it possible to allow the up-and-down mechanism units 66a, 66b of the backup support mechanism sections 60 to be easily disposed outward of respective ones of the X-directionally opposed edges 1c, 1d of the board 1 on the conveying mechanism section 20 (outside the imaging range). Thus, it becomes possible to easily support the board 1 in a backup manner using the up-and-down mechanism units 66a, 66b provided in the substructure 21.

When the board 1 is subjected to imaging by the X-ray imaging section 40 under the condition that it is fixed to the conveyer units 22, the up-and-down mechanism units 66a, 66b of the backup support mechanism section 60 are moved in the Z1 direction with respect to the conveying mechanism section 20 to support the board 1. This makes it possible to perform the X-ray imaging operation under the condition that the Y-directionally opposed edges 1a, 1b of the board 1 are fixed by the movable members 22a and the clamp members 22b, and the board 1 is secondarily supported by the up-and-down mechanism units 66a, 66b. In other words, it becomes possible to effectively prevent a region of the board 1 unfixed by the conveyer units 22, other than the Y-directionally opposed edges 1c, 1d (e.g., the X-directionally opposed edges 1c, 1d, and a central region of the board 1 and a region therearound) from significantly bendingly deforming with respect to the horizontal plane due to its own weight.

The up-and-down mechanism units 66a, 66b are moved in the Z1 direction to support a vicinity of a Y-directionally (widthwise) central region of the board 1. Thus, during the X-ray imaging operation, the vicinity of the Y-directionally central region of the board 1 having the fixed edges 1a, 1b is secondarily supported by the backup support mechanism sections 60, so that it becomes possible to effectively suppress the downward bending deformation of the board 1.

The conveying mechanism section 20 is adapted to allow each of the Y1-side and Y2-side conveyer units 22 to be moved by the same distance along the Y direction with respect to the Y-directionally central line 700 of the conveying mechanism section 20 so as to cause the conveyer units 22 to come closer to or away from each other, thereby allowing the edges 1a, 1b of the board 1 to be fixed to the conveyer units 22 at positions corresponding to respective ones of the edges 1a, 1b. Each of the up-and-down mechanism units 66a, 66b is disposed at a position corresponding to a point on the central line 700 of the conveying mechanism section 20. Thus, in the conveying mechanism section 20 configured such that the board 1 is fixed to the conveyer units 22 while allowing a Y-directionally central region of the board 1 to be constantly located on the central line 700 of the substructure 21 irrespective of a Y-directional width of the board 1, each of the up-and-down mechanism units 66a, 66b is disposed at a position corresponding to a point on the Y-directionally central line 700 of the substructure 21, so that it becomes possible to reliably support the vicinity of the Y-directionally central region of the board 1 in a backup manner.

Each of the backup support mechanism sections 60 includes the support member 67 attached to the up-and-down mechanism unit 66a (66b) and adapted to be moved in the Z1 direction together with the up-and-down mechanism unit 66a (66b) to support the lower surface 1e of the board 1. This makes it possible to, even if the board 1 has various shapes and sizes, easily support the board 1 in a backup manner by effectively utilizing the support member 67 attached to the up-and-down mechanism unit 66a (66b).

Each of the support members 67 attached to respective ones of the up-and-down mechanism units 66a, 66b is moved in the Z1 direction together with a respective one of the up-and-down mechanism units 66a, 66b to support a vicinity of a respective one of the X-directionally opposed edges 1c, 1d of the board 1. This makes it possible to easily support the vicinities of the X-directionally opposed edges 1c, 1d of the board 1 by utilizing the support members 67 attached to respective ones of the up-and-down mechanism units 66a, 66b. In addition, the vicinities of the X-directionally opposed edges 1c, 1d of the board 1 are supported by the support members 67, so that it becomes possible to facilitate maximally preventing the up-and-down mechanism units 66a, 66b from unexpectedly appearing in an X-ray image. The support member 67 (member body 67a) is detachably attached to the liftable portion 64 using the screw members 2. Thus, the support member 67 including the member body 67a and the extension portion 67b each formed in a desired shape in conformity to a shape and size of the board 1 can be freely attached to the liftable portion 64, so that it becomes possible to use the X-ray inspection apparatus 100 in a self-adjusting manner with respect to the board 1 having various shapes and sizes.

The support member 67 has the member body 67a, and the extension portion 67b adapted to be extendable and retractable depending on an X-directional length of the board 1. Thus, even if each of the up-and-down mechanism units 66a, 66b is disposed in spaced-apart relation to a respective one of the X-directionally opposed edges 1c, 1d of the board 1, the X-directionally opposed edges 1c, 1d of the board 1 can be reliably supported using the extension portions 67b of the support members 67 extended with respect to respective ones of the up-and-down mechanism units 66a, 66b.

The member bodies 67a of the support members 67 are attached to respective ones of the up-and-down mechanism units 66a, 66b, and each of the up-and-down mechanism units 66a, 66b is adapted to be moved in the Z1 direction so as to allow the pins 68 provided on a respective one of the extension portions 67b of the support members to support a vicinity of a corresponding one of the X-directionally opposed edges 1c, 1d of the board 1. Thus, the vicinities of the X-directionally opposed edges 1c, 1d of the board 1 can be supported using the pins 68 of the support members 67, so that it becomes possible to suppress bending deformation or the like over the entire board 1.

Each of the up-and-down mechanism units 66a, 66b of the backup support mechanism sections 60 is moved upwardly to support the board 1 when the board 1 is moved within the horizontal plane (X-Y plane) under the condition that it is fixed to the conveyer units 22, as well as when the board 1 is subjected to imaging by the X-ray imaging section 40. Thus, under the condition that the board 1 is fixed to the pair of conveyer units 22, the up-and-down mechanism units 66a, 66b can be moved upwardly to secondarily support the board, even during conveyance of the board 1, irrespective of the presence or absence of the X-ray imaging operation, so that it becomes possible to maintain a state in which bending deformation which would otherwise occur in the board 1 is suppressed.

### (EXAMPLE NOT FORMING PART OF THE INVENTION)

With reference to FIGS. 2, 7 and 13 to 15, an example not forming part of the invention will be described below. The example will be described based on an example in which a backup support mechanism section 260 is configured such that a support member 267 is attached to up-and-down mechanism units 66a, 66b mutually opposed in an X direction, to connect the up-and-down mechanism units 66a, 66b. In the figures, the same element or component as that in the first embodiment is illustrated by assigning thereto the same reference numeral or code as that in the first embodiment. The support member 267 is one example of "second support member" set forth in the appended claims.

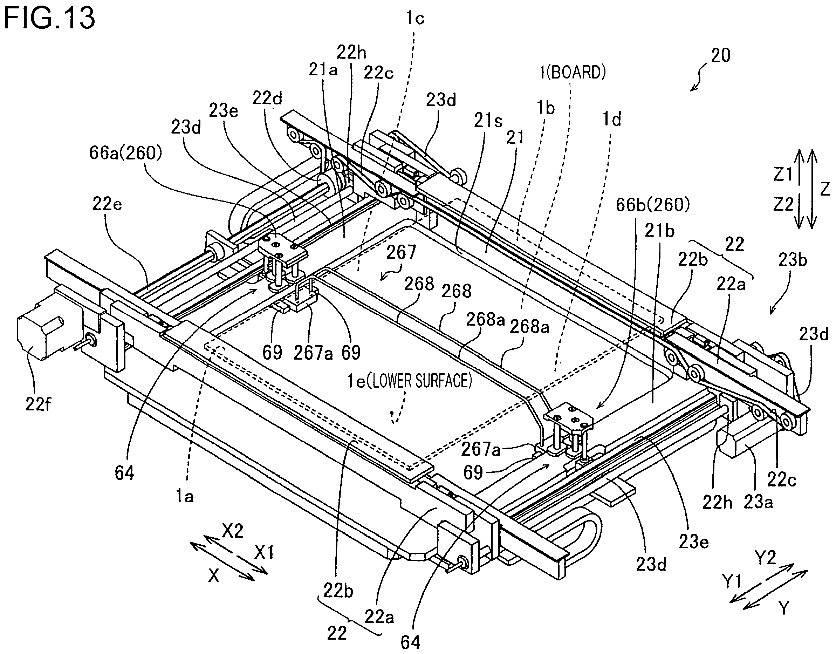

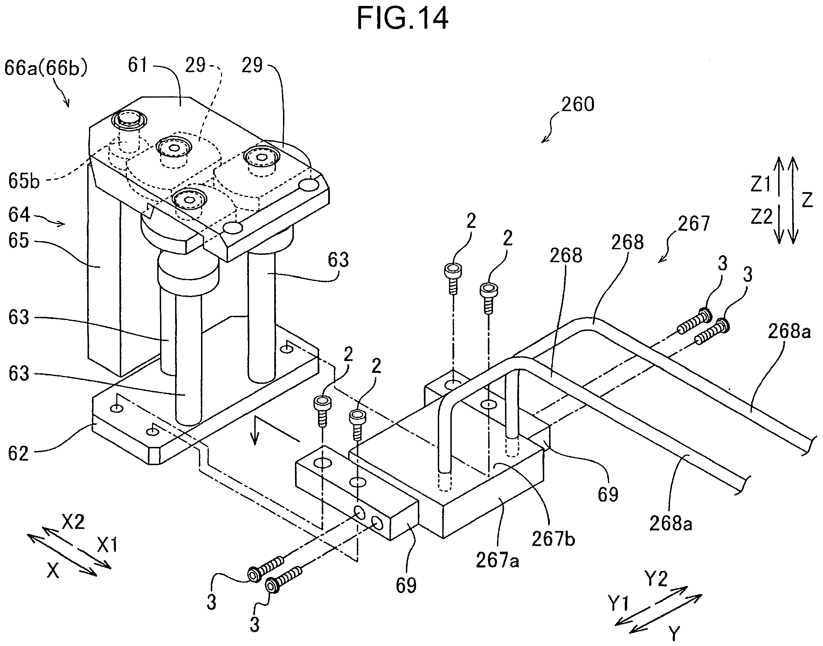

As illustrated in FIG. 13, in an X-ray inspection apparatus 200 according to the example, the backup support mechanism section 260 includes one support member 267 connecting an X2-side liftable portion 64 and an X1-side lifting portion 64 in the X-direction. More specifically, as illustrated in FIG. 14, the support member 267 includes a pair of member bodies 267a each fixable to a lower member 62 of each of the liftable portions 64 through a bracket member 69, and two bridging members 268 for connecting the pair of member bodies 267a. The member body 267a has a pair of the bracket members 69 attached thereto from both sides thereof, using a screw member (in this embodiment, total four screw members) 3. In this state, the bracket members 69 are fixed to an upper surface of the lower member 62 using a screw member (in this embodiment, total four screw members) 2.

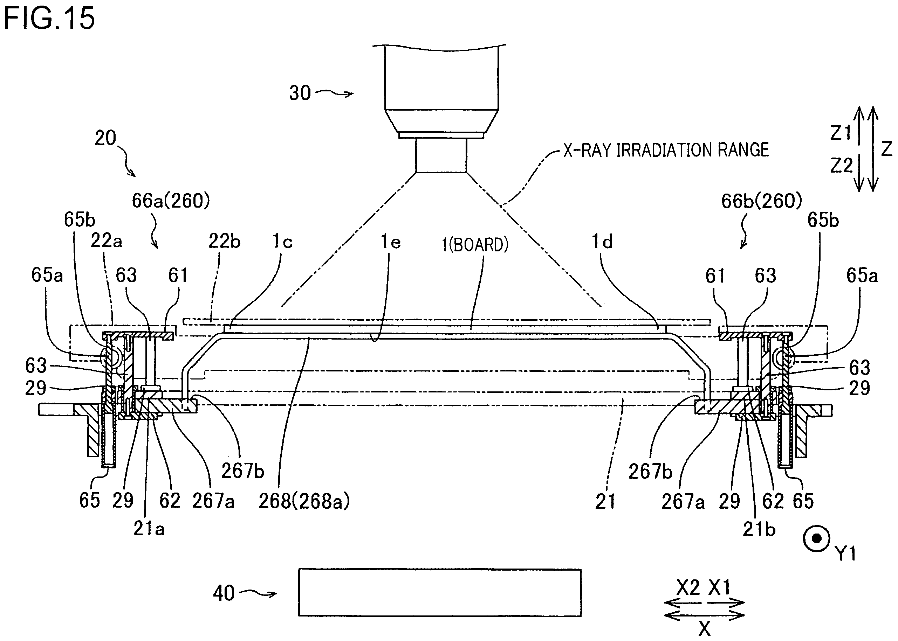

As illustrated in FIG. 15, each of the bridging members 268 is formed such that, after extending from an upper surface 267b of each of the right and left member bodies 267a approximately vertically upwardly (Z1 direction), it is bent inwardly (toward a board 1) by about 45 degrees to extend obliquely by a predetermined distance, and then further bent by about 45 degrees to extend in a horizontal direction (X direction). The horizontally extending beam portion 268a of the bridging member 268 is disposed at a height position (Z-directional position) approximately equal to that of an upper member 61 of the liftable portion 64.

Thus, as illustrated in FIG. 13, in the X-ray inspection apparatus 200, when a board 1 (outer shape is indicated by the broken line) is subjected to imaging by an X-ray imaging section 40 (see FIG. 2) under a condition that two edges 1a, 1b of the board 1 are fixed, respectively, to a pair of conveyer units 22, the up-and-down mechanism units 66a, 66b are moved in an up direction (Z1 direction), so that the bridging members 268 are moved upwardly to allow the beam portions 268a to support a lower surface 1e of the board 1 along the X direction. Each of the two bridging members 268 is disposed to come into line contact with the lower surface 1e (see FIG. 15) of the board 1 along a central line 700 (see FIG. 7) of a substructure 21 at a position adjacent to the central line 700, to support the lower surface 1e from therebelow.

Each of the bridging members 268 is made of a material excellent in radiolucency. As such a material, it is effective to employ a carbon material having a predetermined rigidity. Thus, even if the bridging members 268 are disposed to extend across the lower surface 1e of the board 1 in the X direction, an influence causing the bridging members 268 to unexpectedly appear in an X-ray image becomes minimal. Preferably, the bridging member 268 is formed by subjecting a wire rod formed in a bar shape with a cross-section having a predetermined outer diameter, to bending. This makes it possible to support the board 1 with a minimized contact area between the lower surface 1e of the board 1 and each of the bridging members 268. The bridging member 268 is formed such that, after extending upwardly from the member body 267a, it is bent inwardly (toward the board 1) by about 45 degrees, and then further bent by about 45 degrees, so that it becomes possible to prevent the bridging member 268 from entirely entering into an X-ray irradiation range.

The X-ray inspection apparatus 200 is configured such that, in accordance with an instruction of a control unit 80a (see FIG. 2), the up-and-down mechanism unit 66a and the up-and-down mechanism unit 66b are moved in an up-down direction (Z direction) in a mutually synchronized manner. Thus, as illustrated in FIG. 15, when the support member 267 is moved upwardly, the bridging members 268 support the lower surface 1e of the board 1 under a condition that the beam portion 268a of each of the bridging members 268 is kept in a horizontal posture along the X direction. The remaining configuration of the X-ray inspection apparatus 200 is the same as that of X-ray inspection apparatus 100 according to the first embodiment.

In the example, in the backup support mechanism section 260, the bridging members 268 (support member 267) containing a material excellent in radiolucency are attached to the up-and-down mechanism unit 66a and the up-and-down mechanism unit 66b to connect them. Further, each of the up-and-down mechanism units 66a, 66b is moved in the Z1 direction so as to allow the bridging members 268 to support the lower surface 1e of the board 1 along the X direction. This makes it possible to easily support the board 1 along the X-direction by effectively utilizing the support member 267 connecting the up-and-down mechanism unit 66a and the up-and-down mechanism unit 66b. In this case, the support member 267 containing a material excellent in radiolucency makes it possible to minimally reduce an influence causing the support member 267 to unexpectedly appear in an X-ray image, even if the support member 267 is disposed to extend across an imaging area of the board 1 in the X direction.

Further, the up-and-down mechanism unit 66a and the up-and-down mechanism unit 66b are adapted to be moved in the Z1 direction in a mutually synchronized manner. Thus, when the up-and-down mechanism units 66a, 66b are moved upwardly or downwardly, a height position of the support member 267 connecting the up-and-down mechanism unit 66a and the up-and-down mechanism unit 66b is not almost changed along the X direction, so that it becomes possible to move the support member 267 upwardly and downwardly, while adjusting the height position of the support member 267 to conform to a horizontal plane. This makes it possible to evenly support the board 1 along the X direction and thereby stably support the board 1 within the horizontal plane. The remaining effect in the example is the same as that in the first embodiment.

It should be understood that the embodiments disclosed here are by way of illustration in every respects but not by way of limitation. It is intended that the scope of the present invention is defined by the appended claims but not by the description of the above embodiments, and includes all modifications within the scope of the appended claims.

For example, although the first embodiment has been described based on an example in which the two backup support mechanism sections 60 are provided, respectively, in the (X2-side) edge portion 21a and the (X1-side) edge portion 21b of the substructure 21, the present invention is not limited to this example. Specifically, the backup support mechanism section 60 may be provided in only one of the (X2-side) edge portion 21a and the (X1-side) edge portion 21b of the substructure 21. In this case, the X-ray imaging operation can also be performed under a condition that the lower surface 1e of the board 1 is secondarily supported by the one backup support mechanism section 60.

Although in the above example the backup support mechanism sections 260 is configured by providing the support member 267 (bridging members 268) connecting the pair of up-and-down mechanism units 66a, 66b in the X direction, the backup support mechanism sections 260 may be configured such that only the up-and-down mechanism unit 66a is provided in the (X-2 side) edge portion 21a of the substructure 21, and a support member is attached to the one up-and-down mechanism unit 66a to extend from this up-and-down mechanism unit 66a toward the edge portion 21b in the X direction so as to support the lower surface 1e of the board 1 in a cantilever manner. In this case, the X-ray imaging operation can also be performed under a condition that the lower surface 1e of the board 1 is secondarily supported by moving the one backup support mechanism section 260 upwardly.

Although the first embodiment has been described based on an example in which the up-and-down mechanism units 66a, 66b are disposed outward of respective ones of the (X2-side and XI-side) X-directionally opposed edges 1c, 1d of the board 1, the present invention is not limited to this example. For example, the up-and-down mechanism units 66a, 66b may be disposed adjacent to respective ones of the X-directionally opposed edges 1c, 1d of the board 1. Further, the lower surface 1e of the board 1 may be supported directly by the up-and-down mechanism units 66a, 66b without providing the support members 67.

Although the first embodiment has been described based on an example in which the lower surface 1e of the board 1 is supported by the pins 68 of the support members 67 moved upwardly together with the up-and-down mechanism units 66a, 66b, the present invention is not limited to this example. For example, a support member attached to the up-and-down mechanism unit may be configured to support the board 1 in such a manner that it is suction-attached to an upper surface of the board and then moved to pull the board 1 upwardly. In this case, the X-ray imaging operation can also be performed under a condition that bending deformation due to own weight of the board 1 is suppressed. As another example of modification, the support member attached to the up-and-down mechanism unit may be configured to support the board 1 in such a manner that it holds the edges 1c, 1d of the board 1 and pulls the board 1 outwardly, along with a lifting (upward) movement thereof. In this case, it is possible to suppress downward sagging of not only the board 1 but also a sheet-shaped target object having a significantly large size (plane area) and a small thickness. In this respect, the use of the backup support mechanism section in the present invention is useful.

Although the first embodiment has been described based on an example in which the up-and-down mechanism unit 66a (66b) and the support member 67 are formed as separate components, the present invention is not limited to this example. For example, the support member and the liftable portion may be integrally formed.

Although the first embodiment has been described based on an example in which a support area of the support member is located at the position P on the central line 700, the present invention is not limited to this example. For example, the support area of the support member may be located at a position other than the central line 700.

Although the first embodiment has been described based on an example in which the two pins 68 are provided on each of the support members 67, the present invention is not limited to this example. The number of the pins 68 may be one or may be three or more. Although the two bridging members 268 are provided in parallel relation, the number of the bridging members 268 may be one or may be three or more.

Although the first embodiment has been described based on an example in which the X-ray inspection apparatus is configured such that the X-ray source 30 is disposed just above the conveying mechanism section 20 (board 1), and the X-ray imaging section 40 is disposed just below the conveying mechanism section 20 (board 1), the present invention is not limited to this example. Specifically, the X-ray inspection apparatus may be configured such that the X-ray source is disposed just below the board 1, and the X-ray imaging section is disposed just above the board 1.

Although the first embodiment has been described based on an example in which the liftable portion 64 is driven by the air cylinder 65 adapted to be driven up and down by compressed air, the present invention is not limited to this example. The up-and-down mechanism unit may be constructed using a driving source other than the air cylinder 65, such as an electric motor (stepping motor), and a gear mechanism for converting a torque of the electric motor to a reciprocating movement in an up-down direction.

Although the first embodiment has been described based on an example in which the board 1 is conveyed into the apparatus body from the right side (XI side), and then conveyed out of the apparatus body from the left side (X2 side), when viewed from the side of the front wall of the apparatus body, the present invention is not limited to this example. For example, the X-ray inspection apparatus may be configured such that the board 1 is conveyed into the apparatus body from the left side (X2 side), and then conveyed out of the apparatus body from the right side (XI side).

Although the first embodiment has been described based on an example in which the present invention is applied to an X-ray inspection apparatus (100, 200) constituting the circuit board manufacturing line 500, the present invention is not limited to this example. For example, the present invention may be applied to an X-ray inspection apparatus (board inspection apparatus) which is installed outside the circuit board manufacturing line 500, independently, and used in a stand-alone manner (off-line).

Although the first embodiment has been described based on an example in which the present invention is applied to an X-ray inspection apparatus (100, 200) for inspecting the board 1, the present invention is not limited to this example. For example, the present invention may be applied to an X-ray inspection apparatus for inspecting a target object other than the circuit board.

Although the first embodiment has been described based on an example in which the X-ray inspection apparatus 100 (200) is equipped with only the X-ray source 30 as the light source, the present invention is not limited to this example. For example, the X-ray inspection apparatus (board inspection apparatus) may further includes a visible light source and a visible-light imaging section, wherein it is configured to be capable of performing both X-ray inspection and visible light-based appearance inspection for the board 1. The bending deformation of the board 1 is suppressed by the backup support mechanism section, so that an image clearer than an image during the visible light-based appearance inspection can be obtained.

The above specific embodiments primarily include an invention having the features as defined in claim 1.

## Claims

1. An X-ray inspection apparatus (100) comprising:
an X-ray imaging section (40) for imaging a target object (1) by means of X-rays;
an X-ray source (30) for irradiating the target object with X-rays; and
a conveyance section (20) for conveying the target object to allow it to be disposed between the X-ray source and the X-ray imaging section, the conveyance section (20) including a substructure (21) formed in a frame shape with an generally rectangular-shaped opening (21S) and a pair of conveyer units (22) provided on the substructure (21) to extend in a first direction (X direction) of the target object conveyance direction in parallel relation to each other, the conveyance section (20) further including a fixing device (22a) for fixing at least one of two edges (1a, 1b) of the target object mutually opposed in a second direction (Y direction) intersecting with the first direction within an horizontal plane, the fixing device (22a) being adapted to fix the second-directionally opposed edges (1a, 1b) of the target object;
**characterized by**
a backup support mechanism section (60) including
an up-and-down mechanism unit (66a, 66b) provided on the substructure (21) and adapted to be disposed adjacent to or outward of at least one of two edges (1c, 1d) of the target object mutually opposed in the first direction (X direction) within the horizontal plane, and, when the target object is subjected to imaging by the X-ray imaging section, to be moved in an up-down direction (Z direction) perpendicular to the horizontal plane so as to support the target object, and
a support member (67) attached to the up-and-down mechanism unit (66a, 66b) and adapted to be moved in the up-down direction with respect to the conveyance section (20) together with the up-and-down mechanism unit (66a, 66b) so as to support a vicinity of the edge (1c, 1d) of the target object in the first direction; wherein
the support member (67) is attached to the up-and-down mechanism unit (66a, 66b) to protrude to an inside of the opening (21S), and includes an upper wall (67c) that is provided a pin (68) for supporting the target object and a lower wall (67e) that has a shape so as to prevent the support member (67) from entering into an X-ray irradiation range,
the support member (67) has an extension portion (67b),
the pin (68) is provided on the extension portion (67b),
the pin (68) is adapted to support a vicinity of a central region of the target object in the second direction (Y direction), and
the pin (68) is adapted to support the vicinity of the central region of one of the edges (1c, 1d) mutually opposed in the first direction (X direction), from below.

2. The X-ray inspection apparatus as defined in claim 1, wherein the up-and-down mechanism unit of the backup support mechanism section is adapted, when the target object is subjected to imaging by the X-ray imaging section, under a condition that the target object is fixed to the fixing device, to be moved in the up-down direction with respect to the conveyance section so as to support the target object.

3. The X-ray inspection apparatus as defined in claim 1, wherein the fixing device includes a first fixing device (22a, 22b) for fixing one edge (1a) of the target object in the second direction, and a second fixing device (22a, 22b) for fixing the other edge (1b) of the target object, and wherein:
the conveyance section is adapted to allow each of the first and second fixing devices to be moved by approximately the same distance along the second direction with respect to a central line of the conveyance section in the second direction so as to cause the first and second fixing devices to come closer to or away from each other, thereby allowing the one edge and the other edge of the target object to be fixed to the first and second fixing devices at positions corresponding to respective ones of the one edge and the other edge of the target object.

4. The X-ray inspection apparatus as defined in claim 1, wherein the support member (67) is extendable and retractable in the first direction depending on a first-directional length of the target object.

5. The X-ray inspection apparatus as defined in claim 4, wherein the up-and-down mechanism unit of the backup support mechanism section has a first up-and-down mechanism unit (66a) provided on one side of the conveyance section in the first direction, and a second up-and-down mechanism unit (66b) provided on the other side, and wherein:
the support member (67) is respectively mounted to the first up-and-down mechanism unit and the second up-and-down mechanism unit (66b); and
each of the first up-and-down mechanism unit and the second up-and-down mechanism unit (66b) is moved in the up-down direction so as to allow a respective one of the support members (67) to support a vicinity of a corresponding one of the first-directionally opposed edges of the target object.

6. The X-ray inspection apparatus as defined in claim 1, wherein the up-and-down mechanism unit of the backup support mechanism section has a first up-and-down mechanism unit (66a) provided on one side of the conveyance section in the first direction, and a second up-and-down mechanism unit (66b) provided on the other side, and wherein:
the support member (267) is attached to the first up-and-down mechanism unit (66a) and the second up-and-down mechanism unit (66b) to connect them, the support member (267) contains a material excellent in radiolucency; and
each of the first up-and-down mechanism unit (66a) and the second up-and-down mechanism unit (66b) is moved in the up-down direction so as to allow the support member (267) to support the target object along the first direction.

7. The X-ray inspection apparatus as defined in claim 6, wherein the first up-and-down mechanism unit (66a) and the second up-and-down mechanism unit (66b) are moved in the up-down direction in a mutually synchronized manner.

8. The X-ray inspection apparatus as defined in any one of claims 1 to 7, wherein:
the conveyance section is adapted to allow the target object to be moved within the horizontal plane under the condition that the target object is fixed to the fixing device; and
the up-and-down mechanism unit is adapted, when the target object is moved within the horizontal plane under the condition that it is fixed to the fixing device, to be moved in the up-down direction so as to support the target object, as well as when the target object is subjected to imaging by the X-ray imaging section.

## Patentansprüche

1. Röntgeninspektionseinrichtung (100), umfassend:
einen Röntgenabbildungsabschnitt (40), um ein Zielobjekt (1) mittels Röntgenstrahlen abzubilden;
eine Röntgenquelle (30), um das Zielobjekt mit Röntgenstrahlen zu bestrahlen; und
einen Förderabschnitt (20), um das Zielobjekt zu befördern, sodass es ihm ermöglicht wird, zwischen der Röntgenquelle und dem Röntgenabbildungsabschnitt angeordnet zu werden, wobei der Förderabschnitt (20) eine Unterstruktur (21) umfasst, die in einer Rahmenform mit einer im Allgemeinen rechteckförmigen Öffnung (21S) gebildet ist, und ein Paar Fördereinheiten (22), die auf der Unterstruktur (21) vorgesehen sind, um sich in einer ersten Richtung (X-Richtung) der Zielobjekt-Förderrichtung in paralleler Beziehung zueinander zu erstrecken, wobei der Förderabschnitt (20) weiter eine Befestigungsvorrichtung (22a) umfasst, um mindestens einen von zwei Rändern (1a, 1b) des Zielobjekts zu befestigen, die einander gegenüberliegen in einer zweiten Richtung (Y-Richtung), die sich mit der ersten Richtung innerhalb einer horizontalen Ebene schneidet, wobei die Befestigungsvorrichtung (22a) angepasst ist, um die in der zweiten Richtung gegenüberliegenden Ränder (1a, 1b) des Zielobjekts zu befestigen;
**gekennzeichnet durch**
einen Hilfsstützmechanismus-Abschnitt (60), umfassend
eine Auf-und-Ab-Mechanismus-Einheit (66a, 66b), die auf der Unterstruktur (21) vorgesehen und angepasst ist, um angrenzend an oder außerhalb von mindestens einem von zwei Rändern (1c, 1d) des Zielobjekts angeordnet zu werden, die in der ersten Richtung (X-Richtung) innerhalb der horizontalen Ebene einander gegenüberliegen, und um, wenn das Zielobjekt einer Abbildung durch den Röntgenabbildungsabschnitt unterzogen wird, in einer Auf-Ab-Richtung (Z-Richtung) senkrecht zu der horizontalen Ebene bewegt zu werden, sodass das Zielobjekt gestützt wird, und
ein Stützelement (67), das an der Auf-und-Ab-Mechanismus-Einheit (66a, 66b) befestigt und angepasst ist, um in der Auf-Ab-Richtung in Bezug auf den Förderabschnitt (20) zusammen mit der Auf-und-Ab-Mechanismus-Einheit (66a, 66b) bewegt zu werden, sodass eine Umgebung des Rands (1c, 1d) des Zielobjekts in der ersten Richtung gestützt wird; wobei
das Stützelement (67) an der Auf-und-Ab-Mechanismus-Einheit (66a, 66b) befestigt ist, um zu einem Inneren der Öffnung (21S) vorzuragen, und eine obere Wand (67c) umfasst, die mit einem Stift (68) versehen ist, um das Zielobjekt zu stützen, und eine untere Wand (67e), die eine Form aufweist, sodass das Stützelement (67) daran gehindert wird, in einen Röntgenbestrahlungsbereich einzutreten,
das Stützelement (67) einen Verlängerungsteil (67b) aufweist,
der Stift (68) auf dem Verlängerungsteil (67b) vorgesehen ist,
der Stift (68) angepasst ist, um eine Umgebung eines zentralen Bereichs des Zielobjekts in der zweiten Richtung (Y-Richtung) zu stützen, und
der Stift (68) angepasst ist, um die Umgebung des zentralen Bereichs eines der Ränder (1c, 1d), die in der ersten Richtung (X-Richtung) einander gegenüberliegen, von unten zu stützen.

2. Röntgeninspektionseinrichtung nach Anspruch 1, wobei die Auf-und-Ab-Mechanismus-Einheit des Hilfsstützmechanismus-Abschnitts angepasst ist, um, wenn das Zielobjekt einer Abbildung durch den Röntgenabbildungsabschnitt unterzogen wird, unter einer Bedingung, dass das Zielobjekt an der Befestigungsvorrichtung befestigt ist, in der Auf-Ab-Richtung in Bezug auf den Förderabschnitt bewegt zu werden, sodass das Zielobjekt gestützt wird.

3. Röntgeninspektionseinrichtung nach Anspruch 1, wobei die Befestigungsvorrichtung eine erste Befestigungsvorrichtung (22a, 22b) umfasst, um einen Rand (1a) des Zielobjekts in der zweiten Richtung zu befestigen, und eine zweite Befestigungsvorrichtung (22a, 22b), um den anderen Rand (1b) des Zielobjekts zu befestigen, und wobei:
der Förderabschnitt angepasst ist, um jeder der ersten und zweiten Befestigungsvorrichtungen zu ermöglichen, um ungefähr die gleiche Distanz entlang der zweiten Richtung in Bezug auf eine zentrale Linie des Förderabschnitts in der zweiten Richtung bewegt zu werden, sodass die ersten und zweiten Befestigungsvorrichtungen veranlasst werden, näher zueinander oder weg voneinander zu kommen, wodurch dem einen Rand und dem anderen Rand des Zielobjekts ermöglicht wird, an den ersten und zweiten Befestigungsvorrichtungen an Positionen befestigt zu werden, die Jeweiligen des einen Rands und des anderen Rands des Zielobjekts entsprechen.

4. Röntgeninspektionseinrichtung nach Anspruch 1, wobei das Stützelement (67) in der ersten Richtung ausziehbar und einziehbar ist, je nach einer in der ersten Richtung verlaufenden Länge des Zielobjekts.

5. Röntgeninspektionseinrichtung nach Anspruch 4, wobei die Auf-und-Ab-Mechanismus-Einheit des Hilfsstützmechanismus-Abschnitts eine erste Auf-und-Ab-Mechanismus-Einheit (66a) aufweist, die auf einer Seite des Förderabschnitts in der ersten Richtung vorgesehen ist, und eine zweite Auf-und-Ab-Mechanismus-Einheit (66b), die auf der anderen Seite vorgesehen ist, und wobei:
das Stützelement (67) jeweils an der ersten Auf-und-Ab-Mechanismus-Einheit und der zweiten Auf-und-Ab-Mechanismus-Einheit (66b) angebracht ist; und
jede der ersten Auf-und-Ab-Mechanismus-Einheit und der zweiten Auf-und-Ab-Mechanismus-Einheit (66b) in der Auf-Ab-Richtung bewegt wird, sodass einem Jeweiligen der Stützelemente (67) ermöglicht wird, eine Umgebung eines Entsprechenden der Ränder des Zielobjekts, die in der ersten Richtung einander gegenüberliegen, zu stützen.

6. Röntgeninspektionseinrichtung nach Anspruch 1, wobei die Auf-und-Ab-Mechanismus-Einheit des Hilfsstützmechanismus-Abschnitts eine erste Auf-und-Ab-Mechanismus-Einheit (66a) aufweist, die auf einer Seite des Förderabschnitts in der ersten Richtung vorgesehen ist, und eine zweite Auf-und-Ab-Mechanismus-Einheit (66b), die auf der anderen Seite vorgesehen ist, und wobei:
das Stützelement (267) an der ersten Auf-und-Ab-Mechanismus-Einheit (66a) und der zweiten Auf-und-Ab-Mechanismus-Einheit (66b) befestigt ist, um sie zu verbinden, das Stützelement (267) ein in Strahlendurchlässigkeit ausgezeichnetes Material enthält; und
jeder der ersten Auf-und-Ab-Mechanismus-Einheit (66a) und der zweiten Auf-und-Ab-Mechanismus-Einheit (66b) in der Auf-Ab-Richtung bewegt wird, sodass dem Stützelement (267) ermöglicht wird, das Zielobjekt entlang der ersten Richtung zu stützen.

7. Röntgeninspektionseinrichtung nach Anspruch 6, wobei die erste Auf-und-Ab-Mechanismus-Einheit (66a) und die zweite Auf-und-Ab-Mechanismus-Einheit (66b) in der Auf-Ab-Richtung in einer zueinander synchronisierten Weise bewegt werden.

8. Röntgeninspektionseinrichtung nach einem der Ansprüche 1 bis 7, wobei:
der Förderabschnitt angepasst ist, um dem Zielobjekt zu ermöglichen, innerhalb der horizontalen Ebene unter der Bedingung bewegt zu werden, dass das Zielobjekt an der Befestigungsvorrichtung befestigt ist; und
die Auf-und-Ab-Mechanismus-Einheit angepasst ist, um, wenn das Zielobjekt innerhalb der horizontalen Ebene unter der Bedingung bewegt wird, dass es an der Befestigungsvorrichtung befestigt ist, in der Auf-Ab-Richtung bewegt zu werden, sodass das Zielobjekt gestützt wird, ebenso wenn das Zielobjekt einer Abbildung durch den Röntgenabbildungsabschnitt unterzogen wird.

## Revendications

1. Appareil d'inspection par rayons X (100) comportant :
une section d'imagerie par rayons X (40) pour imager un objet cible (1) au moyen de rayons X ;
une source de rayons X (30) afin d'irradier l'objet cible avec des rayons X ; et
une section de transport (20) pour transporter l'objet cible afin de lui permettre d'être disposé entre la source de rayons X et la section d'imagerie par rayons X, la section de transport (20) incluant une sous-structure (21) constituée en forme de cadre avec une ouverture de forme généralement rectangulaire (21S) et une paire d'unités de transporteur (22) prévues sur la sous-structure (21) pour s'étendre dans une première direction (direction X) de la direction de transport d'objet cible en relation parallèle l'une à l'autre, la section de transport (20) incluant en outre un dispositif de fixation (22a) pour fixer au moins un des deux bords (1a, 1b) de l'objet cible mutuellement opposé dans une seconde direction (direction Y) croisant la première direction au sein d'un plan horizontal, le dispositif de fixation (22a) étant adapté pour fixer les seconds bords opposés au plan de la direction (1a, 1b) de l'objet cible ;
**caractérisé par**
une section de mécanisme de support de secours (60) incluant
une unité de mécanisme montant-descendant (66a, 66b) prévue sur la sous-structure (21) et adaptée pour être disposée adjacente à (ou à l'extérieur de) au moins un des deux bords (1c, 1d) de l'objet cible mutuellement opposé dans la première direction (direction X) au sein du plan horizontal et, lorsque l'objet cible est soumis à une imagerie par la section d'imagerie par rayons X, pour être déplacée dans une direction montante-descendante (direction Z) perpendiculaire au plan horizontal, de manière à supporter l'objet cible et
un élément de support (67) attaché à l'unité de mécanisme montant-descendant (66a, 66b) et adapté pour être déplacé dans la direction montante-descendante par rapport à la section de transport (20) conjointement à l'unité de mécanisme montant-descendant (66a, 66b), de manière à supporter les alentours du bord (1c, 1d) de l'objet cible dans la première direction ; dans lequel
l'élément de support (67) est attaché à l'unité de mécanisme montant-descendant (66a, 66b) pour faire saillie vers un intérieur de l'ouverture (21S) et inclut une paroi supérieure (67c) qui est prévue d'une broche (68) pour supporter l'objet cible et une paroi inférieure (67e) qui a une forme visant à empêcher l'élément de support (67) d'entrer dans une plage d'irradiation par rayons X,
l'élément de support (67) a une portion d'extension (67b),
la broche (68) est prévue sur la portion d'extension (67b),
la broche (68) est adaptée pour supporter les alentours d'une région centrale de l'objet cible dans la seconde direction (direction Y) et
la broche (68) est adaptée pour supporter les alentours de la région centrale de l'un des bords (1c, 1d) mutuellement opposé dans la première direction (direction X) depuis le dessous.

2. Appareil d'inspection par rayons X selon la revendication 1, dans lequel l'unité de mécanisme montant-descendant de la section de mécanisme de support de secours est adaptée, lorsque l'objet cible est soumis à une imagerie par la section d'imagerie par rayons X, à condition que l'objet cible soit fixé au dispositif de fixation, pour être déplacée dans la direction montante-descendante par rapport à la section de transport, de manière à supporter l'objet cible.

3. Appareil d'inspection par rayons X selon la revendication 1, dans lequel le dispositif de fixation inclut un premier dispositif de fixation (22a, 22b) pour fixer un bord (1a) de l'objet cible dans la seconde direction et un second dispositif de fixation (22a, 22b) pour fixer l'autre bord (1b) de l'objet cible et dans lequel :
la section de transport est adaptée pour permettre à chacun des premier et second dispositifs de fixation d'être déplacés sur environ la même distance le long de la seconde direction par rapport à une ligne centrale de la section de transport dans la seconde direction, de manière à amener les premier et second dispositifs de fixation à se rapprocher ou à s'éloigner l'un de l'autre, permettant ainsi au premier bord et à l'autre bord de l'objet cible d'être fixés aux premier et second dispositifs de fixation au niveau de positions correspondant à des positions respectives du premier bord et de l'autre bord de l'objet cible.

4. Appareil d'inspection par rayons X selon la revendication 1, dans lequel l'élément de support (67) est extensible et rétractable dans la première direction en fonction d'une longueur de première direction de l'objet cible.

5. Appareil d'inspection par rayons X selon la revendication 4, dans lequel l'unité de mécanisme montant-descendant de la section de mécanisme de support de secours a une première unité de mécanisme montant-descendant (66a) prévue sur un côté de la section de transport dans la première direction et une seconde unité de mécanisme montant-descendant (66b) prévue sur l'autre côté et dans lequel :
l'élément de support (67) est respectivement monté sur la première unité de mécanisme montant-descendant et la seconde unité de mécanisme montant-descendant (66b) ; et
chaque unité parmi la première unité de mécanisme montant-descendant et la seconde unité de mécanisme montant-descendant (66b) est déplacée dans la direction montante-descendante, de manière à permettre à un élément respectif des éléments de support (67) de supporter les alentours d'un bord correspondant parmi les bords opposés au plan de la première direction de l'objet cible.

6. Appareil d'inspection par rayons X selon la revendication 1, dans lequel l'unité de mécanisme montant-descendant de la section de mécanisme de support de secours a une première unité de mécanisme montant-descendant (66a) prévue sur un premier côté de la section de transport dans la première direction et une seconde unité de mécanisme montant-descendant (66b) prévue sur l'autre côté et dans lequel :
l'élément de support (267) est attaché à la première unité de mécanisme montant-descendant (66a) et à la seconde unité de mécanisme montant-descendant (66b) pour les relier, l'élément de support (267) contient un matériau présentant une excellente radiotransparence ; et
chaque unité parmi la première unité de mécanisme montant-descendant (66a) et la seconde unité de mécanisme montant-descendant (66b) est déplacée dans la direction montante-descendante, de manière à permettre à l'élément de support (267) de supporter l'objet cible le long de la première direction.

7. Appareil d'inspection par rayons X selon la revendication 6, dans lequel la première unité de mécanisme montant-descendant (66a) et la seconde unité de mécanisme montant-descendant (66b) sont déplacées dans la direction montante-descendante de manière mutuellement synchronisée.

8. Appareil d'inspection par rayons X selon l'une quelconque des revendications 1 à 7, dans lequel :
la section de transport est adaptée pour permettre à l'objet cible d'être déplacé au sein du plan horizontal à condition que l'objet cible soit fixé au dispositif de fixation ; et
l'unité de mécanisme montant-descendant est adaptée, lorsque l'objet cible est déplacé au sein du plan horizontal à condition qu'il soit fixé au dispositif de fixation, pour être déplacée dans la direction montante-descendante, de manière à supporter l'objet cible, ainsi que lorsque l'objet cible est soumis à une imagerie par la section d'imagerie par rayons X.
